# EUROPEAN PATENT APPLICATION

(11) **EP 4 106 092 A1**
(43) Date of publication of application: **21.12.2022**
(21) Application number: 21859808.4
(22) Date of filing: 18.06.2021
(51) Int. Cl.: H01M 50/249

(54) **LARGE POUCH CELL MODULE AND ELECTRIC AUTOMOBILE COMPRISING SAME**

(30) Priority: 24.08.2020 CN 202021782954 U
(71) Applicant: Hefei Gotion High-Tech Power Energy Co., Ltd., Hefei, Anhui 230012 (CN)
(72) Inventor: LU, Hengfei, Hefei, Anhui 230012 (CN); XU, Xingwu, Hefei, Anhui 230012 (CN); LI, Shijing, Hefei, Anhui 230012 (CN)
(74) Representative: Barker Brettell LLP
(86) International application number: PCT/CN2021/100864
(87) International publication number: WO 2022/041964

(57) **Abstract**

The present disclosure provides a large pouch module and an electric vehicle including the same. The large pouch module includes a plurality of core modules and a housing accommodating the core modules; each of the core modules includes a plurality of core assemblies connected in series, and the plurality of core assemblies are folded in an M-folding manner to form the core module; a plurality of partition plates are vertically arranged inside the housing to partition an interior of the housing into a plurality of spaces. The large pouch module of the present disclosure can be used as the battery of the electric vehicle, which has a low cost, an excellent performance, safety and reliability, and wide application fields.

## Description

### TECHNICAL FIELD

The present disclosure relates to a pouch battery, in particular to a 390 large pouch module directly formed by laminated cores or winded cores, belonging to the technical field of pouch batteries.

### BACKGROUND

In order to save BOM cost and manufacturing cost of a battery system and a battery module, it is necessary to change the traditional manufacturing method of the battery system and the battery module.

In the traditional manufacturing method of the battery system, electric cores are manufactured first, then the electric cores are assembled into a battery module, and finally the battery module can be installed in a battery box. The BOM cost of the battery system includes an electric core cost, a module cost and a system PACK material cost, and the manufacturing cost includes an electric core manufacturing cost, a module manufacturing cost and a system manufacturing cost as well.

In order to reduce cost and increase efficiency of the battery system, a CTP mode, i.e., a mode from electric core to PACK directly, is proposed, that is, all the individual electric cores are assembled and fixed in the battery box to form a whole PACK battery pack with the advantages of improving a volume utilization rate of the battery box, reducing the number of battery pack parts, improving a production efficiency and reducing the cost. However, the CTP mode has a high demand for the consistency of the battery, and thus is not conducive to after-sale maintenance. The whole pack of batteries needs to be replaced whenever one battery goes wrong, which is unfavorable for cascade utilization of the battery and results in the poor wide adaptability.

### SUMMARY

In order to solve the above technical problems, the present disclosure aims to provide a pouch battery which is low in cost, excellent in performance, safe and reliable, and has extensive application fields.

In order to achieve the above technical objective, the present disclosure firstly provides a large pouch module, which includes a plurality of core modules and a housing containing the core modules.

Each of the core modules includes a plurality of core assemblies connected in series, and the plurality of core assemblies are folded in an M-folding manner to form the core module.

A plurality of partition plates are vertically arranged inside the housing to partition an interior of the housing into a plurality of spaces.

The large pouch module of the present disclosure is realized by directly forming laminated cores or winded cores (Jelly-roll) into a module (JTM), thereby saving the material cost and manufacturing cost of assembling of the laminated cores or winded cores.

In a specific embodiment of the present disclosure, each of the core modules includes a plurality of cores connected in parallel, the plurality of cores are folded in an M-folding manner to form the core assembly, and the core is a laminated core or a winded core. The housing includes a housing body, a first cover plate assembly and a second cover plate assembly, wherein the housing body is formed by a first cover plate, a first side plate, a second cover plate and a second side plate which are connected in an end-to-end sequence, the housing body is wrapped around a side periphery of the core module. The first cover plate assembly covers a surface of an end of the core module and is electrically connected to a pole lug of the end (the end refers to the end of the end surface) of the core module. The second cover plate assembly covers a surface of another end of the core module and is electrically connected to a pole lug of the end (the end refers to another end surface) of the core module.

In a specific embodiment of the present disclosure, the housing further includes a first side cover plate disposed on an outer surface of the first cover plate assembly and a second side cover plate disposed on an outer surface of the second cover plate assembly. The housing further includes a first end plate disposed on an outer surface of the first side cover plate, and a second end plate disposed on an outer surface of the second side cover plate. The first cover plate assembly includes a body and an outlet copper bar and a bus copper bar that are disposed on the body. The second cover plate assembly includes a body and an outlet copper bar and a bus copper bar that are disposed on the body. A positive pole plug and a negative pole plug of the core assembly are connected by a connecting sheet. The bus copper bar of the first cover plate assembly is electrically connected to the connecting sheet. The bus copper bar of the second cover plate assembly is electrically connected to the connecting sheet. Inner surfaces of the first cover plate and the second cover plate are correspondingly provided with cutting grooves for fixing the partition plates. The inner surfaces of the first cover plate and the second cover plate are provided with insulating films. Preferably, insulating film has a thickness of 0.1 mm to 0.2 mm; more preferably 0.1 mm or 0.2 mm. The large pouch module is a large module of a pouch battery with a standard size of 600 mm or more in width and 390 mm in length.

The large pouch module of the present disclosure includes a housing encapsulating the core modules. The housing encapsulating the core modules includes a first cover plate, a first side plate, a second cover plate, a second side plate, a first cover plate assembly and second cover plate assembly partition plates.

In a specific embodiment of the present disclosure, the first cover plate, the first side plate and the second side plate may be individual panels, respectively. The first side plate and the second side plate may be vertically fixed to the first cover plate respectively to form a protective cover. The first cover plate serves as a bottom surface of the protective cover. The first side plate and the second side plate serve as two opposite side walls of the protective cover. The first cover plate is provided with cutting grooves for inserting the partition plates. The cutting grooves may be designed as inwardly recessed stamped ribs to enhance strength and increase the area of application of the structural adhesive. The protective cover may be made of an aluminum alloy material. In order to reduce the weight and ensure the welding strength, the thickness of the protective cover may be preferably 1.5 mm. The first cover plate may be hot-pressed with an insulating film having a thickness of 0.1 to 0.2 mm (preferably 0.1 mm or 0.2 mm) to achieve insulation from the core.

In a specific embodiment of the present disclosure, the second cover plate is used to encapsulate the upper surface of the protective cover (opposite to the first cover plate). The second cover plate may be a cover plate made of an aluminum alloy material. In order to reduce the weight, the thickness of the second cover plate is preferably 1 mm. The inner surface of the second cover plate is provided with cutting grooves for inserting fixed partition plates, and the cutting grooves of the second cover plate are arranged correspondingly to that of the first cover plate. The cutting grooves can be designed as stamped ribs which are stamped downwards. After the second cover plate is assembled, the structural adhesive may be coated at the position of the stamped rib to fix the partition plates. The insulating films are hot-pressed or adhered on the inner surfaces of the first cover plate and the second cover plate, to achieve insulation of the cover plate from the core. The first cover plate and the second cover plate are fixed with the first side plate and the second side plate (two side walls of the protective cover) through buckles. The second cover plate may be buckled on the protective cover, and the L-shaped side edges of the second cover plate are attached to the side edges of the protective cover.

In a specific embodiment of the present disclosure, the partition plates are used to partition the internal space of the housing into a plurality of spaces, and each space is used to accommodate a core module formed by the plurality of core assemblies. The partition plates are inserted into the cutting grooves of the first cover plate firstly, and penetrate through the cutting grooves of the second cover plate when the second cover plate is installed, and the structural adhesive may be applied to the cutting grooves for fixing. Multiple core assemblies are divided into multiple spaces (which may be two or more) and connection fixing points are increased, which greatly enhances the strength, overall stiffness, and expansion resistance of the module.

In a specific embodiment of the present disclosure, the first cover plate assembly and the second cover plate assembly are used to electrically connect a plurality of core assemblies. The first cover plate assembly is fixedly connected with the first side plate and the second side plate, so as to cover an end surface of the core module. The second cover plate assembly is fixedly connected with the first side plate and the second side plate, so as to cover the other end surface of the core module. The cover plate assembly is an integrated cover plate with a pre-integration of a high-voltage copper bar (to achieve series connection of the cores) and a low-voltage collection (to collect voltage and temperature signals of the module). The cover plate assembly includes an outlet copper bar, a bus copper bar and a body, wherein the body is provided with blocks matched with the buckles of the first side cover plate and the buckles of the second side cover plate; and the body may be made of plastic. The cover plate assembly is connected to the connecting sheet that connects the positive pole plug and the negative pole plug in the core assembly, so as to realize the series connection of a plurality of core assemblies.

In a specific embodiment of the present disclosure, the outer surfaces of the first cover plate assembly and the second cover plate assembly are respectively provided with a first side cover plate and a second side cover plate for insulating the cover plate assemblies. The side cover plates may be plates that are made of engineering plastic. One end of the first side cover plate (second side cover plate) is provided with a total positive outlet of the module, and a nut (preferably a stainless steel nut) is embedded in the total positive outlet in advance. At an opposite end of the second side cover plate (first side cover plate), a total negative outlet of the module is provided and a nut (preferably a stainless steel nut) is embedded in the total negative outlet in advance. The two side edges and the upper and lower fixing edges of the side cover plates can be respectively provided with several buckles to realize the fixing thereof. At the same time, the inner surface of the side cover plate may have a concave structure for concave engagement with a fixed pillar of the end plates, so as to ensure the bolt fixation of the end plates.

In a specific embodiment of the present disclosure, the outer surface of the first side cover plate is provided with a first end plate, and the outer surface of the second side cover plate is provided with second end plate. Preferably, the end plates have a thickness of 1.5 mm. The inner surface of the end plate is provided with a fixed pillar for fixing the partition plates and the first and second side plates. The end plates may be plates that are made of an aluminum alloy material. The bottom of the end plates may be provided with a welding rib, so as to realize welding and fixing with the bottom of the protective cover.

The large pouch module of the present disclosure is a large module of a pouch battery with a standard size of 600 mm or more in width and 390 mm in length.

The present disclosure further provides an electric vehicle, which includes the large pouch module according to the present disclosure. For example, the large pouch module of the present disclosure may be adopted as a power battery.

The large pouch module of the present disclosure has both a low-cost and a high-performance. Said low-cost (JTM, which forms the module directly from the winded core or the laminated core) allows for a significant reduction in cost and can compete with lead-acid batteries, while in terms of high-performance, by optimizing the design of the battery module and the internal core, the volume utilization rate of the module can be improved, the battery capacity can be improved, and the power quantity of the battery module can be improved.

The electrical performance of the JTM large pouch module of the present disclosure can be comparable to or even better than that of the same volume ternary battery module, while having the characteristics of high safety of an iron lithium battery module.

The driving range of the electric vehicle equipped with a large pouch module of the present disclosure can be comparable to that of a battery vehicle equipped with a ternary lithium battery, and can be better in terms of cost and safety.

### BRIEF DESCRIPTION OF DRAWINGS

FIG. 1 is a structural diagram of a large pouch module according to an embodiment of the present disclosure;
FIG. 2 is an exploded structural diagram of a large pouch module according to an embodiment of the present disclosure;
FIG. 3 is a structural diagram of an outer frame and partition plates of a large pouch module according to an embodiment of the present disclosure;
Fig. 4 is an exploded schematic diagram of a fixed structure of an outer frame, end plates and partition plates of a large pouch module according to an embodiment of the present disclosure;
FIG. 5 is a structural diagram of a protective cover of a large pouch module according to an embodiment of the present disclosure;
FIG. 6 is a structural diagram of an upper cover plate of a large pouch module according to an embodiment of the present disclosure;
FIG. 7 is a structural diagram of an end plate of a large pouch module according to an embodiment of the present disclosure;
FIG. 8a is a structural diagram of a surface of a side cover plate of a large pouch module according to an embodiment of the present disclosure;
FIG. 8b is a structural diagram of another surface of a side cover plate of a large pouch module according to an embodiment of the present disclosure;
FIG. 9 is a structural diagram of a cover plate assembly of a large pouch module according to an embodiment of the present disclosure; and
FIG. 10 is a structural diagram of an internal core assembly of a large pouch module according to an embodiment of the present disclosure.

### Description of main reference numerals:

1. protective cover; 2. module cover plate; 3. partition plate; 4. end plate; 5. side cover plate; 6. cover plate assembly; 7. core module; 1-1. cutting groove; 1-2. through hole; 1-3. first insulating film; 1-4. second insulating film; 2-1. concave cutting groove; 2-2. third insulating film; 4-1. fixed pillar; 4-3. welding rib; 5-1. outlet; 5-2. buckle; 5-3. inner groove; 6-1. outlet copper bar; 6-2. bus copper bar; 6-4. body; 6-4-1. block; 7-1. core assembly; 7-1-1. foam; 7-1-3. double-sided adhesive.

### DESCRIPTION OF EMBODIMENTS

In order to have a clearer understanding of the technical features, objects and beneficial effects of the present disclosure, the following detailed description will now be made of technical solutions of the present disclosure, which, however, should not be construed as limitation to the applicable scope of the present disclosure.

### Embodiment 1

A large pouch module in the embodiments includes a protective cover 1, a module cover plate 2, module partition plates 3, module end plates 4, a module side cover plates 5, integrated cover plate assemblies 6 and a core module 7, wherein the core module 7 is formed by a plurality of core assemblies 7-1 connected in series.

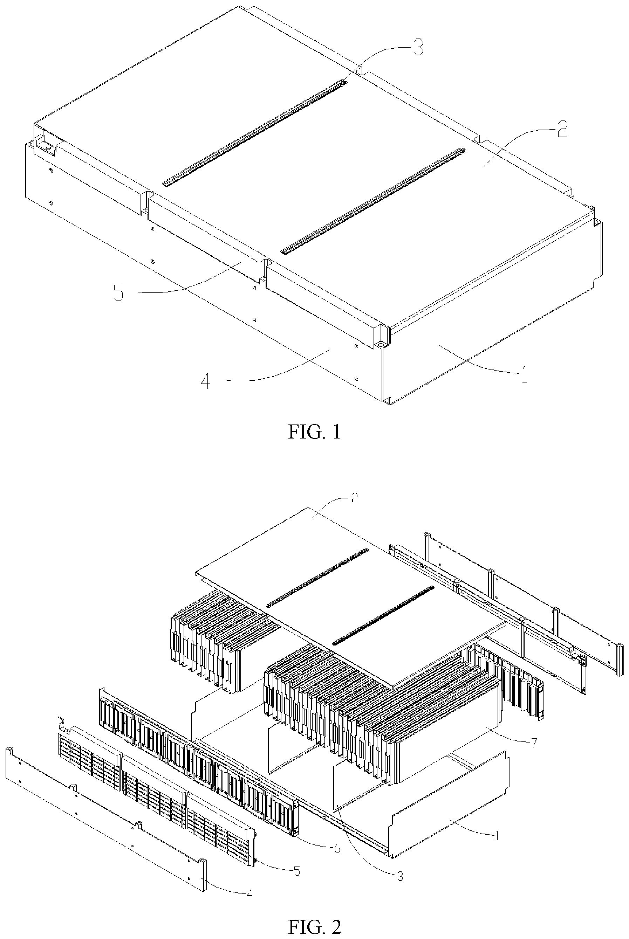

As shown in FIG. 1, the large pouch module in the embodiments is a 3-in parallel-15-in series (3P5S) large pouch module. The protective cover 1 of the module is divided into three parts by partition plates 3, in each of which one core module 7 having 3-in parallel-5-in series cells is arranged. The integrated cover plate assemblies 6 with a pre-integration of a high-voltage copper bar and a low-voltage collection realizes electrical connection of the large pouch module. The positive and negative poles of the large pouch module are respectively located at two opposite corners of the module end.

As shown in FIG. 2, a side cover plates 5 is further provided outside the cover plate assembly 6 to ensure the insulation of the module. End plates 4 are respectively arranged outside the side cover plates 5, and the end plates 4 are respectively welded and fixed with both side edges and the bottom edge of the protective cover 1. In addition, the upper cover plate 2 is fixed to the protective cover 1 by welding, and at the same time is fixed with the partition plates 3 by using the structural adhesive.

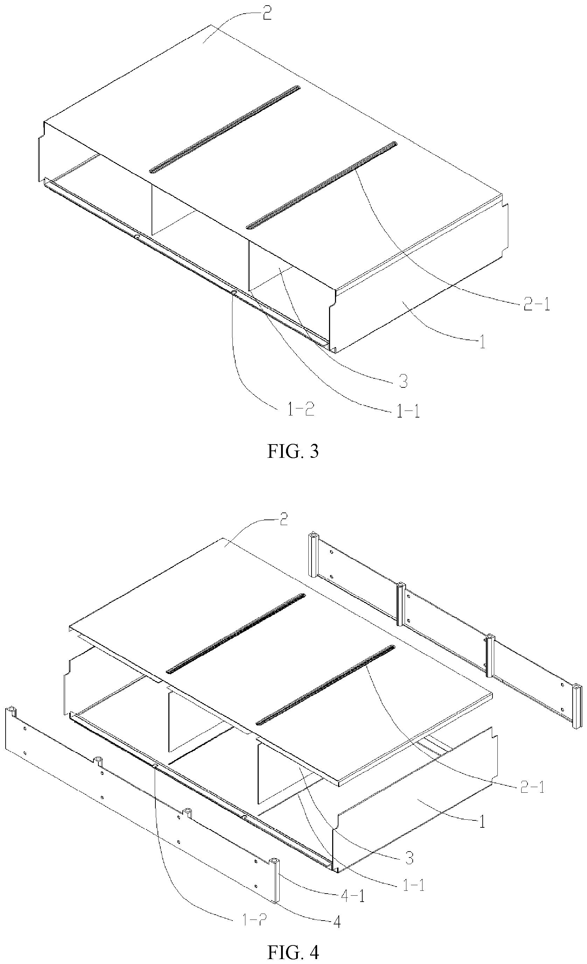

As shown in FIG. 3, the outer frame of the large pouch module in the embodiments includes a module fixed protective cover 1 and a module cover plate 2. The protective cover 1 is provided with cutting grooves 1-1 at its bottom surface. The inner surface of the module cover plate 2 is provided with concave cutting grooves 2-1. The cutting grooves 1-1 and the concave cutting grooves 2-1 are used for insertion of the fixed partition plates. The cutting grooves 1-1 and the concave cutting grooves 2-1 are provided in correspondence with each other.

For example, the two partition plates 3 are inserted into the two cutting grooves 1-1 in advance and are bonded and fixed by the structural adhesive. When the upper cover plate 2 is installed, the partition plates 3 pass through the concave cutting grooves 2-1, and are fixed by applying the structural adhesive to the cutting grooves 2-2. The whole large module is divided into three regions by using the partition plates 3, and connection fixing points are increased, which greatly enhances the strength, overall stiffness, and expansion resistance of the module.

FIG. 4 is an exploded schematic diagram of a fixed structure of the outer frame, the end plates and the partition plates of the large pouch module in the embodiment of the present disclosure. Both side edges of the module cover plate 2 are respectively fixed with two side walls of the protective cover 1 by laser lap welding. The fixed pillars 4-1 on the ends of the end plates 4 are welded respectively with the protruding edges of the side walls of the module fixed protective cover 1. A bottom of the end plate 4 is fixed to an end stepped protruding edge of the module fixed protective cover 1 by laser welding. Through holes 1-2 are formed on the end stepped protruding edge of the protective cover 1, and are concentric with bolt holes of the fixed pillars 4-1 in the end plates 4. The whole large module is fixed by the bolt holes of the two end plates.

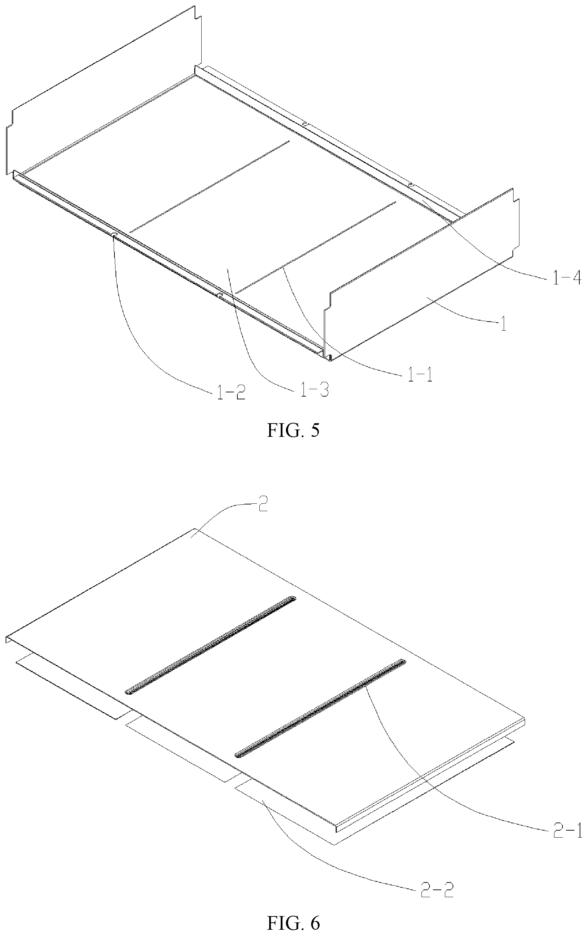

As shown in FIG. 5, the protective cover 1 in the embodiments has a bottom surface and two opposite side walls, and is used to accommodate the core module 7. The bottom surface of the protective cover 1 is provided with cutting grooves 1-1 for inserting the fixed partition plates 3. Herein, the cutting grooves may be designed as inwardly recessed stamped ribs, so as to enhance strength and increase the area of application of the structural adhesive. The protective cover 1 is made of aluminum alloy with a thickness of 1.5mm. A first insulating film 1-3 of 0.1 mm or 0.2 mm is hot-pressed at the bottom of the protective cover 1, so as to achieve the insulation from the laminated core or winded core. Through holes 1-2 are formed on the end stepped protruding edge of the protective cover 1, and are concentric with bolt holes of the fixed pillars 4-1 in the end plates 4. A second insulating film 1-4 is provided inside the turnup of the protective cover 1.

As shown in FIG. 6, the module cover plate 2 in the embodiments is made of aluminum alloy, and has a thickness of 1 mm. The module cover plate 2 is provided symmetrically with two downwardly stamping ribs and concave cutting grooves 2-1. After the module cover plate 2, the structural adhesive is applied at the position of the stamping rib to fix the module partition plates 3. Three third insulating films 2-2 are thermally pressed or adhered to the inner surface of the module cover plate 2.

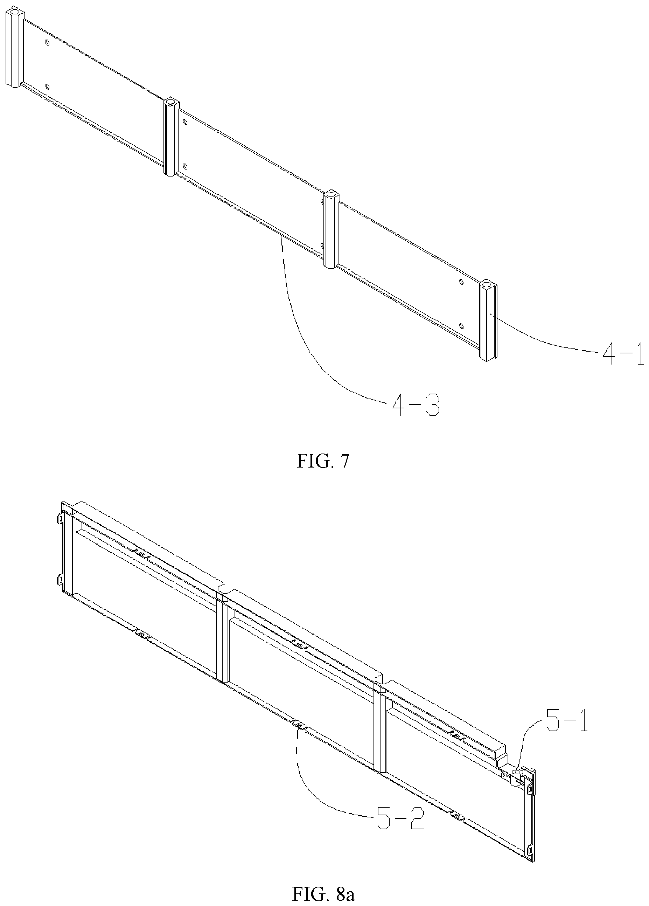

As shown in FIG. 7, the end plates 4 in the embodiments are made of aluminum alloy, and have a thickness of 1.5mm. The end plate 4 is provided with four extruded fixed pillars 4-1. The bottom of the end plate 4 is provided with a welding rib 4-3 to realize welding and fixing with the bottom of the protective cover 1.

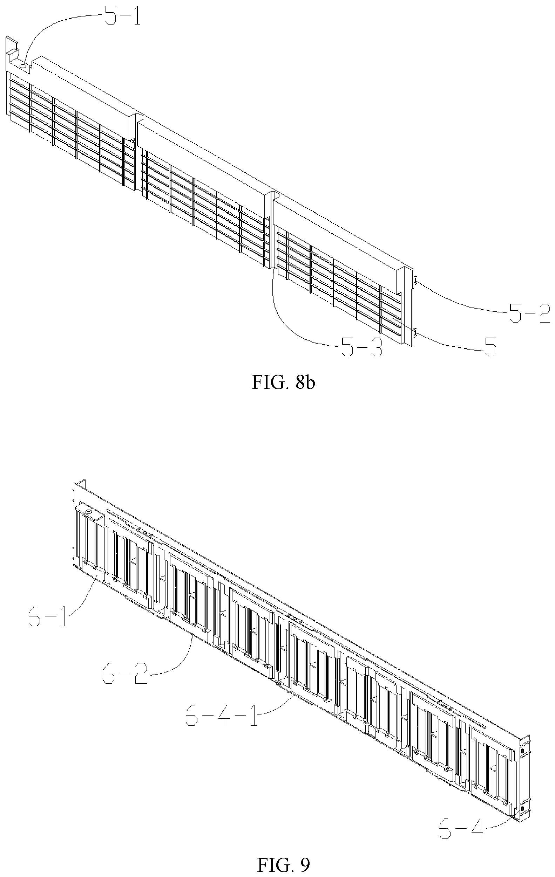

As shown in FIGs. 8a and 8b, the side cover plates 5 in the embodiments are made of an engineering plastic material, and a positive or negative outlet 5-1 is provided at a position close to one side and a stainless steel nut is embedded in the positive or negative outlet 5-1 in advance. Two side edges as well as the upper and lower fixing edges of the side cover plates 5 are respectively provided with several buckles 5-2 for achieving the fixing of the side cover plates 5. At the same time, inner grooves 5-3 are arranged corresponding to the fixed pillar position of the end plates 4, so as to fix the bolts in the end plates 4.

As shown in FIG. 9, the cover plate assembly 6 in the embodiments mainly includes an outlet copper bar 6-1, a bus copper bar 6-2 and a plastic part of a body 6-4. The body 6-4 is provided with blocks 6-4-1 which are matched with the buckles 5-2 on the side cover plates 5.

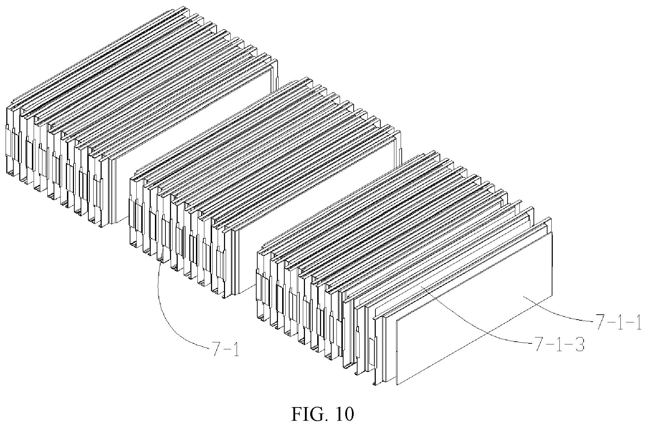

As shown in FIG. 10, the core module 7 in the large pouch module according to the embodiments is composed of 3P15S cores, and can be divided into three 3P5S units which are stacked in advance. When stacked, the outermost side of the core module 7 is flame retardant insulating fireproof foam 7-1-1 that has a thickness of 2 mm. In the core module 7, a piece of fireproof foam 7-1-1 is also arranged between the serials (3-in parallel). A flame retardant double-sided adhesive 7-1-3 is arranged between each pair of core assemblies 7-1 inside each serial in the core module 7, and the core assemblies 7-1 are pre-fixed by the double-sided adhesive. After the units of core module 7 have been stacked, they are respectively placed in three regions partitioned by the module partition plates 3 in the protective cover 1. The contact area of the bottom of the protective cover 1 with the core assemblies is coated with a thermally conductive structural adhesive, so as to achieve fixing of the core assemblies and thermal interaction at the bottom.

## Claims

1. A large pouch module, comprising a plurality of core modules and a housing accommodating the core modules;
each of the core modules comprises a plurality of core assemblies connected in series, and the plurality of core assemblies are folded in an M-folding manner to form the core module; and
a plurality of partition plates are vertically arranged inside the housing to partition an interior of the housing into a plurality of spaces.

2. The large pouch module according to claim 1, wherein each of the core modules comprises a plurality of cores connected in parallel, the plurality of cores are folded in an M-folding manner to form the core assembly, and the core is a laminated core or a winded core.

3. The large pouch module according to claim 1, wherein the housing comprises a housing body, a first cover plate assembly and a second cover plate assembly, wherein the housing body is formed by a first cover plate, a first side plate, a second cover plate and a second side plate which are connected in an end-to-end sequence, the housing body is wrapped around a side periphery of the core module; the first cover plate assembly covers a surface of an end of the core module and is electrically connected to a pole lug of the end of the core module; and the second cover plate assembly covers a surface of another end of the core module and is electrically connected to a pole lug of the another end of the core module.

4. The large pouch module according to claim 3, wherein the housing further comprises a first side cover plate, a second side cover plate, a first end plate and a second end plate; the first side cover plate is disposed on an outer surface of the first cover plate assembly, the second side cover plate is disposed on an outer surface of the second cover plate assembly, the first end plate is disposed on an outer surface of the first side cover plate, and the second end plate is disposed on an outer surface of the second side cover plate.

5. The large pouch module according to claim 3, wherein the first cover plate assembly comprises a body and an outlet copper bar and a bus copper bar that are disposed on the body; and the second cover plate assembly comprises a body and an outlet copper bar and a bus copper bar that are disposed on the body.

6. The large pouch module according to claim 1, wherein a positive pole plug and a negative pole plug of the core assembly are connected by a connecting sheet; the bus copper bar of the first cover plate assembly is electrically connected to the connecting sheet; and the bus copper bar of the second cover plate assembly is electrically connected to the connecting sheet.

7. The large pouch module according to claim 3, wherein inner surfaces of the first cover plate and the second cover plate are correspondingly provided with cutting grooves for fixing the partition plates.

8. The large pouch module according to claim 3, wherein inner surfaces of the first cover plate and the second cover plate are provided with insulating films.

9. The large pouch module according to claim 8, wherein the insulating film has a thickness of 0.1 mm to 0.2 mm.

10. The large pouch module according to claim 9, wherein the insulating film has a thickness of 0.1 mm or 0.2 mm.

11. The large pouch module according to claim 1, wherein the large pouch module comprises a housing encapsulating the core modules; wherein the housing encapsulating the core modules comprises a first cover plate, a first side plate, a second cover plate, a second side plate, a first cover plate assembly and second cover plate assembly partition plates.

12. The large pouch module according to claim 11, wherein the first cover plate, the first side plate and the second side plate are individual panels respectively, and the first side plate and the second side plate are vertically fixed to the first cover plate respectively to form a protective cover; wherein the first cover plate serves as a bottom surface of an anti-slip cover, and the first side plate and the second side plate serve as two opposite side walls of the anti-slip cover.

13. The large pouch module according to claim 12, wherein the protective cover has a thickness of 1.5 mm; and the first cover plate is hot-pressed with an insulating film having a thickness of 0.1 mm to 0.2 mm.

14. The large pouch module according to claim 11, wherein the second cover plate is used to encapsulate an upper surface of the protective cover and is opposite to the first cover plate.

15. The large pouch module according to claim 3, wherein the first cover plate assembly and the second cover plate assembly are used to electrically connect a plurality of core assemblies.

16. The large pouch module according to claim 3, wherein outer surfaces of the first cover plate assembly and the second cover plate assembly are respectively provided with a first side cover plate and a second side cover plate for insulating cover plate assemblies.

17. The large pouch module according to claim 16, wherein the outer surface of the first side cover plate is provided with a first end plate, and the outer surface of the second side cover plate is provided with a second end plate.

18. The large pouch module according to claim 1, further comprising partition plates, wherein the partition plates are used to partition an internal space of the housing into a plurality of spaces, and each space is used to accommodate a core module formed by the plurality of core assemblies.

19. The large pouch module according to any of claims 1 to 18, wherein the large pouch module is a large module of a pouch battery with a standard size of 600 mm or more in width and 390 mm in length.

20. An electric vehicle, comprising a large pouch module according to any of claims 1 to 19.
